# EUROPEAN PATENT APPLICATION

(11) **EP 4 810 425 A1**
(43) Date of publication of application: **23.09.2026**
(21) Application number: 26165983.3
(22) Date of filing: 19.03.2026
(51) Int. Cl.: B65H 29/62, B42B 5/08, B42C 1/12, B65H 43/04, G03G 15/00

(54) **CONVEYANCE APPARATUS, CORRESPONDING IMAGE FORMING SYSTEM, AND CONTROL METHOD OF CONVEYANCE APPARATUS**

(30) Priority: 21.03.2025 JP 2025047027
(71) Applicant: Konica Minolta, Inc., Tokyo 100-7015 (JP)
(72) Inventor: OHTSUKA, Masaru, Tokyo, 100-7015 (JP); ARAI, Hiroyuki, Tokyo, 191-8511 (JP)
(74) Representative: MFG Patentanwälte Meyer-Wildhagen Meggle-Freund Gerhard PartG mbB

(57) **Abstract**

The present disclosure provides a conveyance apparatus that makes it possible to avoid a situation in which a job is redone due to an incorrect sheet in a print job in which ring binding processing is performed on a binder sheet to form a booklet. The conveyance apparatus according to the present disclosure includes a controller that determines whether the binder sheet during conveyance is conforming or non-conforming, based on an arrangement of a punch hole or a shape of the punch hole in the binder sheet specified from a read image, and executes abnormality conveyance processing on the binder sheet during the conveyance in a case where a non-conforming binder sheet is detected among a plurality of the binder sheets during the conveyance.

## Description

### Cross Reference to Related Applications

The entire disclosure of Japanese Patent Application No. 2025-47027, filed on March 21, 2025, is incorporated herein by reference in its entirety.

### Background

### Technological Field

The present disclosure relates to a conveyance apparatus, an image forming system, and a control method of a conveyance apparatus.

### Description of Related Art

In recent years, an image forming system has been developed in which a post-processing apparatus is coupled to an image forming apparatus and which is capable of performing ring binding processing on a sheet printed by the image forming apparatus to bind a booklet or the like. For example, see Japanese Patent Application Laid-Open No. 2013-152314.

In this type of image forming system, some users may use, in printing, a binder sheet (also referred to as a pre-punched sheet) in which a punch hole has been formed in advance.

There are various standards for binder sheets having different arrangements or shapes of punch holes. For this reason, when such a binder sheet is used, for example, the arrangement or shape of a punch hole is set in advance on the system, and control (that is, ring binding processing) corresponding to the arrangement or shape of each punch hole is executed. However, in a case where the arrangement or shape of a punch hole of a passed binder sheet is a type different from that in the setting, optimum control corresponding to each sheet is not executed. That is, when binder sheets having different arrangements or shapes of punch holes are mixed, a failure occurs in which normal ring binding processing cannot be performed. Note that, hereinafter, such a sheet will be referred to as an "incorrect sheet" or a "non-conforming sheet".

Normally, in the ring binding processing, printing is continuously performed on a plurality of binder sheets, and the plurality of sheets on which the printing has been performed is collected by a ring binding member to form a booklet or the like. For this reason, in a case where even a single sheet of such incorrect binder sheets is mixed, there is a risk that a job will be redone due to the occurrence of an operation failure or the occurrence of a jam. In such a case, it is necessary to redo the printing from the printing stage for the sheet of the first page. For this reason, such a situation needs to be avoided from the viewpoint of productivity.

In particular, a recent image forming system includes a plurality of sheet feed trays, and has a configuration in which sheets of the same type or of different types can be set in the respective sheet feed trays. Then, at the time of printing, sheets are selectively fed from these sheet feed trays according to the job setting. In addition, at the time of printing, the sheet feed trays may be automatically switched depending on the job setting. For this reason, a situation is likely to occur in which different sheets are mixed during printing due to a setting error in the job setting, an error in loading of sheets into a sheet feed tray, or the like. Note that, such a situation also occurs in a case where the orientation of a binder sheet loaded on a sheet feed tray is different from the specified orientation.

### Summary

The present invention has been made in view of the above-mentioned problems. That is, it is an object of the present invention to provide a conveyance apparatus that makes it possible to avoid a situation in which a job is redone due to an incorrect sheet in a print job in which ring binding processing is performed on a binder sheet to form a booklet. In addition, in another aspect, it is an object of the present invention to provide an image forming system including the conveyance apparatus. In addition, in another aspect, it is an object of the present invention to provide a control method of the conveyance apparatus.

To achieve at least one of the above-mentioned objects, according to an aspect of the present invention, a conveyance apparatus reflecting one aspect of the present invention includes:
a sheet feeder that continuously feeds a binder sheet;
a conveyor that conveys the binder sheet along a conveyance route;
a reader that is disposed in the conveyance route and reads the binder sheet; and
a controller that determines whether the binder sheet during conveyance is conforming or non-conforming, based on an arrangement of a punch hole or a shape of the punch hole in the binder sheet specified from a read image, and executes abnormality conveyance processing on the binder sheet during conveyance in a case where a non-conforming binder sheet is detected among a plurality of the binder sheets during the conveyance.

In addition, an image forming system reflecting another aspect of the present invention includes:
the conveyance apparatus described above;
an image forming apparatus that forms an image on the binder sheet; and
a post-processing apparatus that is disposed on a downstream side of the image forming apparatus and performs ring binding processing on the binder sheet.

In addition, a control method of a conveyance apparatus reflecting another aspect of the present invention includes:
continuously feeding a binder sheet;
conveying the fed binder sheet along a conveyance route;
reading the binder sheet during conveyance, and
determining whether the binder sheet during the conveyance is conforming or non-conforming, based on an arrangement of a punch hole or a shape of the punch hole in the binder sheet specified from a read image, and executing abnormality conveyance processing on the binder sheet during the conveyance in a case where a non-conforming binder sheet is detected among a plurality of the binder sheets during the conveyance.

### Brief Description of Drawings

The advantages and features provided by one or more embodiments of the invention will become more fully understood from the detailed description given hereinbelow and the appended drawings which are given by way of illustration only, and thus are not intended as a definition of the limits of the present invention:
Fig. 1 is a diagram illustrating an example of the configuration of an image forming system;
Fig. 2 is a diagram illustrating an example of a binder sheet;
Fig. 3 is a diagram illustrating an example of the configuration of a ring binding unit;
Fig. 4 is a diagram illustrating an example of the configuration of a ring binding member;
Fig. 5 is a diagram illustrating an example of an aspect of ring binding processing using the ring binding member;
Fig. 6 is a diagram illustrating examples of function blocks of the image forming system;
Fig. 7 is a diagram illustrating an example of an operation screen according to setting of a job;
Fig. 8 is a diagram illustrating an example of an operation screen according to setting of a job;
Fig. 9 is a diagram illustrating an example of an operation screen according to setting of a job;
Fig. 10 is a diagram illustrating an example of an operation screen according to setting of a job;
Fig. 11 is a diagram illustrating an example of a flowchart in which a controller of an image forming apparatus creates job information;
Fig. 12 is a flowchart illustrating processing of a main routine performed by the controller when printing is executed;
Fig. 13 is a flowchart illustrating incorrect sheet determination processing (S22) in the main routine in Fig. 12;
Fig. 14 is a diagram provided for schematically describing the incorrect sheet determination processing (S22);
Fig. 15 is a diagram illustrating an example of a warning display in a case where an incorrect sheet is detected;
Fig. 16 is a diagram provided for describing an aspect of the incorrect sheet determination processing (S22) according to Variation 1;
Fig. 17 is a flowchart illustrating the incorrect sheet determination processing (S22) according to Variation 1;
Fig. 18 is a diagram illustrating the configuration of the image forming system according to Variation 2; and
Fig. 19 is a flowchart illustrating the processing of the main routine performed by the controller according to Variation 2.

### Detailed Description of Embodiments

Hereinafter, one or more embodiments of the present invention will be described with reference to the drawings. However, the scope of the invention is not limited to the disclosed embodiments.

### (Embodiment 1)

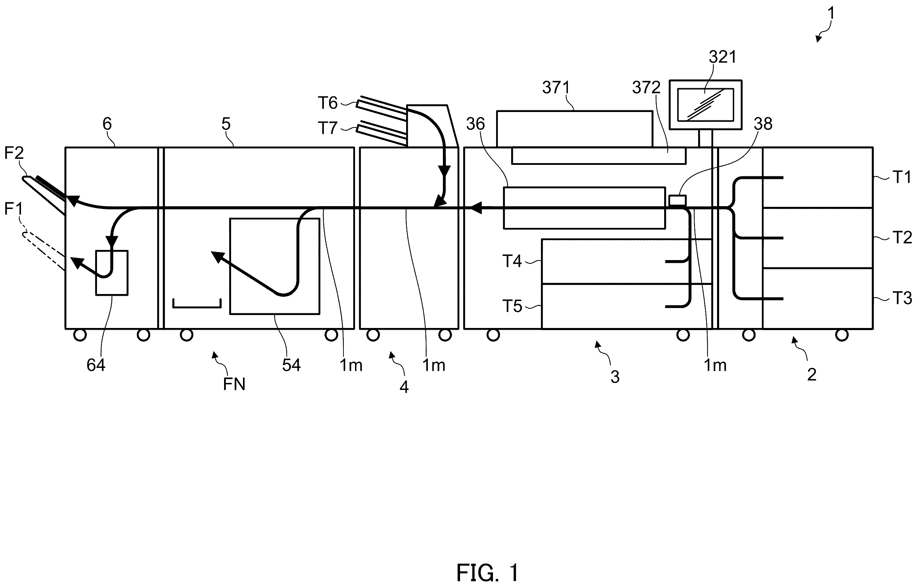

First, hereinafter, an example of the configuration of an image forming system (hereinafter, referred to as the "image forming system 1") according to an embodiment of the present invention will be described with reference to Figs. 1 to 5. Note that, the image forming system 1 according to the present embodiment is configured such that a binder sheet in which a punch hole has been formed in advance is applicable, and is configured to allow ring binding processing to be performed on the binder sheet.

Fig. 1 is a diagram illustrating an example of the configuration of the image forming system 1.

The image forming system 1 includes: a sheet feed apparatus 2; an image forming apparatus 3; a sheet insertion apparatus 4; a post-processing apparatus FN; and a conveyor 1m that connects the above-mentioned apparatuses to convey a sheet. Note that, the conveyor 1m connects the sheet feed apparatus 2, the image forming apparatus 3, the sheet insertion apparatus 4, and the post-processing apparatus FN in this order from the upstream side. In Fig. 1, the arrows indicate the conveyance direction of a sheet. Note that, in the present invention, the conveyance-related configuration of the image forming system 1 is also referred to as a "conveyance apparatus".

The sheet feed apparatus 2 feeds a sheet to the image forming apparatus 3. The sheet feed apparatus 2 includes a plurality of sheet feed trays T1 to T3, and selectively feeds a sheet to the image forming apparatus 3 from one of the sheet feed trays T1 to T3. Note that, for example, a binder sheet in which a punch hole has been formed in advance is loaded on one of the sheet feed trays T1 to T3. The binder sheets loaded on the sheet feed tray T1, the sheet feed tray T2, and the sheet feed tray T3, respectively, may be of the same type or of different types.

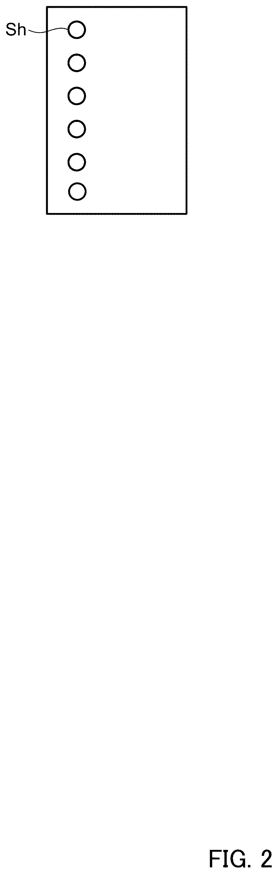

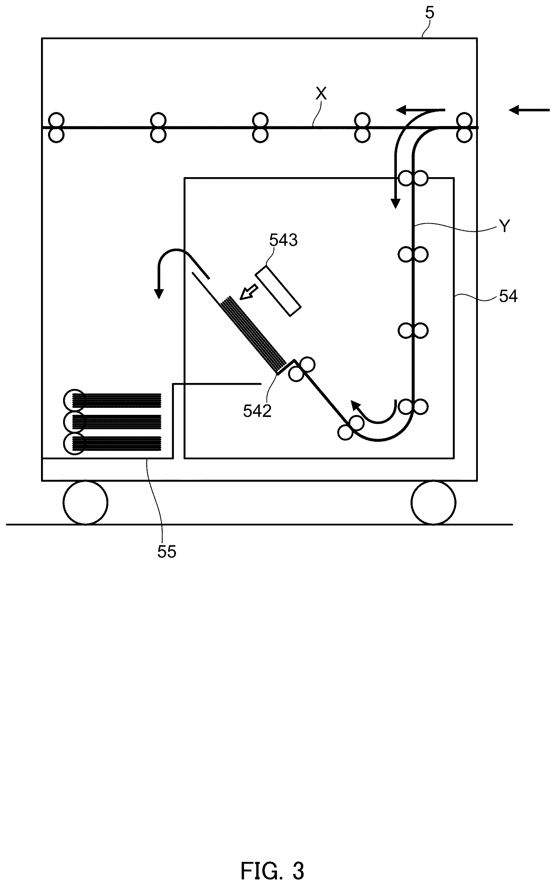

Fig. 2 is a diagram illustrating an example of a binder sheet. The binder sheet includes a punch hole Sh through which a ring binding member B (see Fig. 3) is passed when ring binding processing is performed. Fig. 2 illustrates an aspect in which six punch holes Sh having a circular shape are formed on the left end side of the sheet.

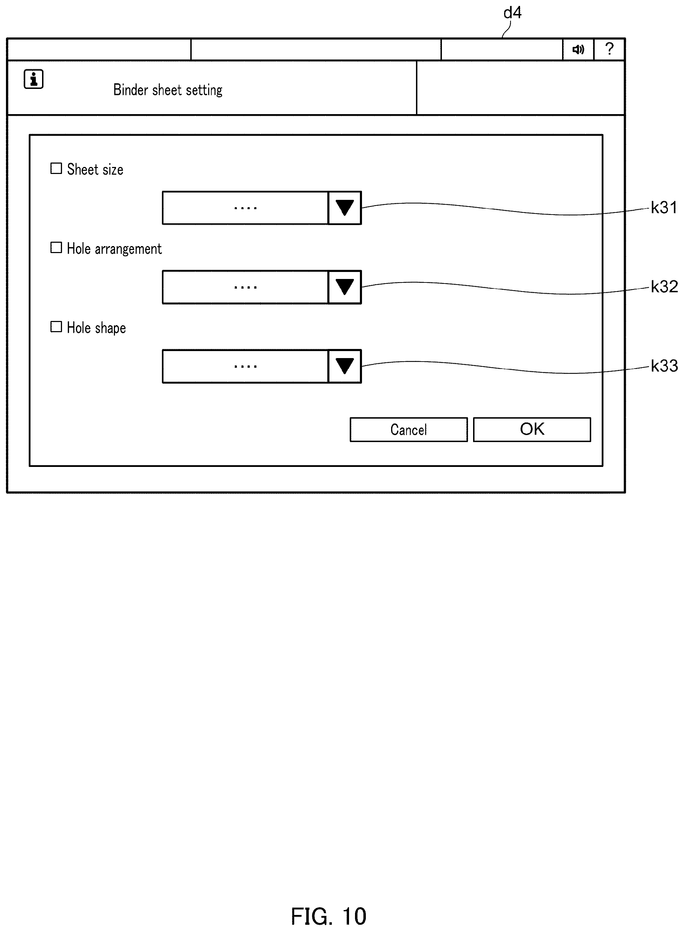

Note that, when a binder sheet is used in the image forming system 1 according to the present embodiment, the arrangement (and/or the shape) of a punch hole in the binder sheet is set in advance on the system by an operation of a user, or the like (see Fig. 10). However, the arrangement (and/or the shape) of a punch hole in a binder sheet may also be set from a read image of the first sheet when a print job is performed (see Variation 1).

The image forming apparatus 3 includes: an automatic document feed apparatus 371; a scanner 372; sheet feed trays T4 and T5; a touch screen 321; a printing section 36; and the like, and performs printing on a sheet. The sheets on which the printing has been performed by the printing section 36 are sequentially conveyed to the sheet insertion apparatus 4 and are fed out to the post-processing apparatus FN. Note that, in the present embodiment, the image forming apparatus 3 is configured to execute printing by an electrophotographic method, but the image forming apparatus 3 may also execute printing on a sheet by an inkjet method.

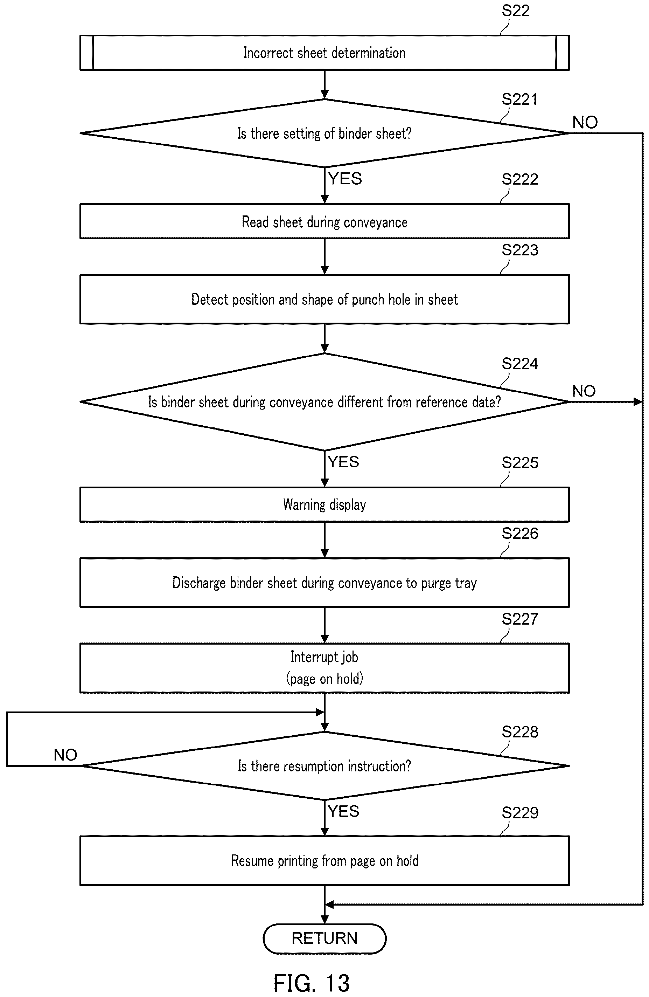

In addition, the image forming apparatus 3 includes a reader 38 upstream of the printing section 36 in the conveyance direction, where the reader 38 captures, from the upper surface side, an image of a sheet to be conveyed to the conveyor 1m. Then, the image forming apparatus 3 determines, based on a read image obtained by the reader 38, whether the sheet during conveyance is an incorrect sheet, and controls subsequent conveyance operations (for example, discharge to a purge tray F2) (this matter will be described later with reference to Fig. 13).

The sheet insertion apparatus 4 includes sheet feed trays T6 and T7 provided in two upper and lower stages. The sheet feed trays T6 and T7 are capable of feeding a sheet for a front cover, a sheet for a back cover, and sheets for binding of the front and back covers, which are used for bookbinding. In the present embodiment, the sheet to be loaded on the sheet feed trays T6 and T7 is also a binder sheet (hereinafter, also referred to as "additional binder sheet"). The sheet insertion apparatus 4 feeds sheets set in the sheet feed tray T6 in the upper stage and the sheet feed tray T7 in the lower stage to the post-processing apparatus FN according to an instruction inputted from the image forming apparatus 3. That is, the sheet insertion apparatus 4 sends out both a sheet, on which printing has been performed by the image forming apparatus 3, and a sheet, which has been inserted from the sheet feed trays T6 and T7, to the post-processing apparatus FN.

The post-processing apparatus FN includes a ring binding unit 5 and a stapling unit 6, and performs post-processing on a sheet on which an image has been formed by the image forming apparatus 3 (as well as on a sheet that has been inserted by the sheet insertion apparatus 4).

The conveyor 1m conveys a sheet fed from the sheet feed apparatus 2. Specifically, the conveyor 1m first conveys a sheet from the sheet feed trays T1 to T3 to the printing section 36. Next, the conveyor 1m conveys the sheet from the printing section 36 to the sheet insertion apparatus 4. Next, the conveyor 1m conveys the sheet from the sheet insertion apparatus 4 to the post-processing apparatus FN. Next, the conveyor 1m ejects the sheet, on which post-processing has been performed, to a sheet ejection tray F1. On the other hand, the conveyor 1m ejects an incorrect sheet to the purge tray F2.

Note that, the conveyor 1m is constituted by, for example, a plurality of conveyance rollers and motors that drive the conveyance rollers.

Fig. 3 is a diagram illustrating an example of the configuration of the ring binding unit 5.

The ring binding unit 5 includes two conveyance routes X and Y, and includes a ring binding processing section 54 on the conveyance route Y. In a case where the ring binding processing is not performed, the ring binding unit 5 feeds a sheet, which has been fed from the sheet insertion apparatus 4, to the stapling unit 6 via the conveyance route X. In a case where the ring binding processing is performed, on the other hand, the ring binding unit 5 conveys a sheet, which has been fed from the sheet insertion apparatus 4, to the conveyance route Y.

The ring binding processing section 54 includes a stack section 542 and a binding section 543.

When a sheet is conveyed to the conveyance route Y, the sheet is conveyed to and loaded on the stack section 542. The binding section 543 attaches a ring binding member B to a bundle of sheets loaded on the stack section 542 and binds the sheets. The bound booklet is accommodated in a sheet ejection tray 55.

Note that, although not illustrated here, the ring binding processing section 54 may include, before the stack section 542, a punching section that punches a sheet and provide a plurality of holes for ring binding such that ring binding processing can also be executed on a normal sheet.

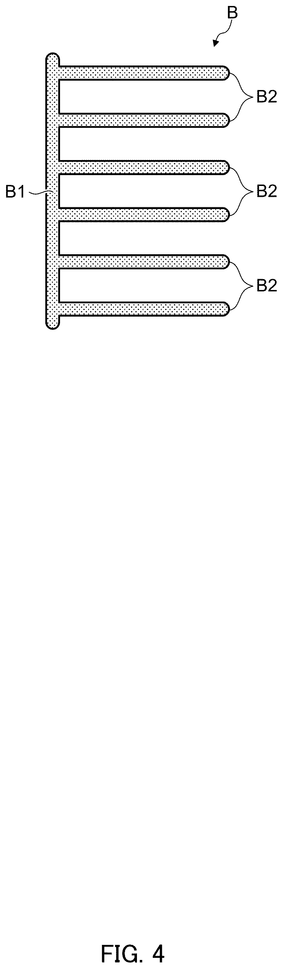

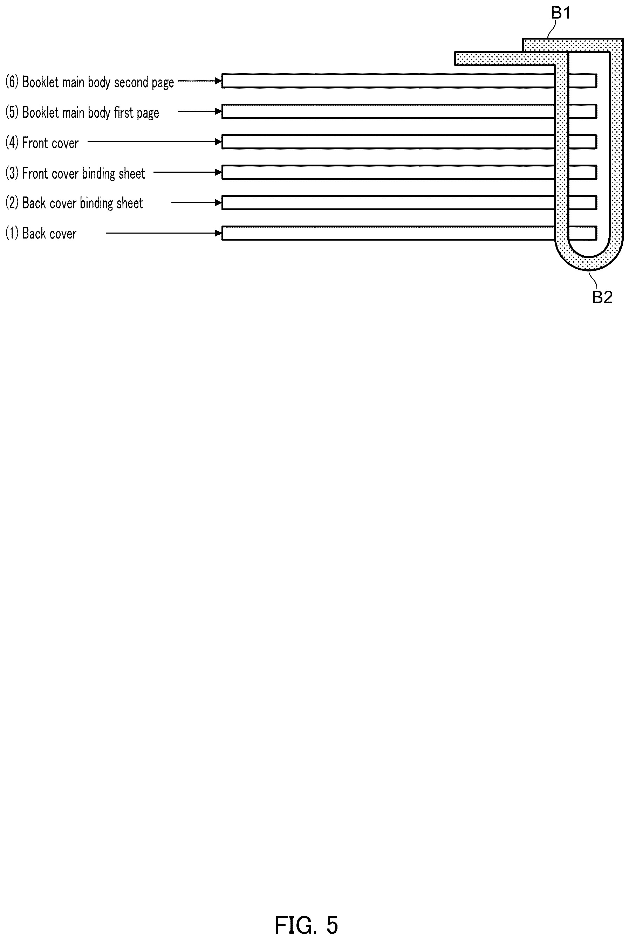

Fig. 4 is a diagram illustrating an example of the configuration of the ring binding member B. Fig. 5 is a diagram illustrating an example of an aspect of ring binding processing using the ring binding member B.

The ring binding member B is formed in a flat plate shape, and is provided with a plurality of ring forming portions B2 in a comb shape on a support portion B1. As the material of the ring binding member B, for example, polyester or cellulose ester resin can be used.

As illustrated in Fig. 5, the binding portion 543 passes a leading end of the ring forming portion B2 through a punch hole provided in a sheet, curves the ring forming portion B2 into a cylindrical shape, and then adheres an overlapping portion with the support portion B1. Thus, a ring for bundling a bundle of sheets is formed.

Note that, when the ring binding processing is performed, sheets are fed from the sheet insertion apparatus 4 or the sheet feed apparatus 2 to the ring binding processing section 54, for example, in the order of (1) back cover; (2) back cover binding sheet; (3) front cover binding sheet; (4) front cover; and (5) booklet main body, and are stacked.

The stapling unit 6 includes a stapling processing section 64. In the same manner as the ring binding unit 5, the stapling unit 6 switches between two conveyance routes. That is, the stapling unit 6 feeds a sheet, which is subjected to stapling processing, to a conveyance route in which the stapling processing section 64 is provided, and conveys a sheet, which is not the target, to the other conveyance route and ejects the sheet to a sheet ejection tray. The stapling processing section 64 loads sheets, which have been fed, and binds the sheets with staples. The bound sheets are ejected to a sheet ejection tray.

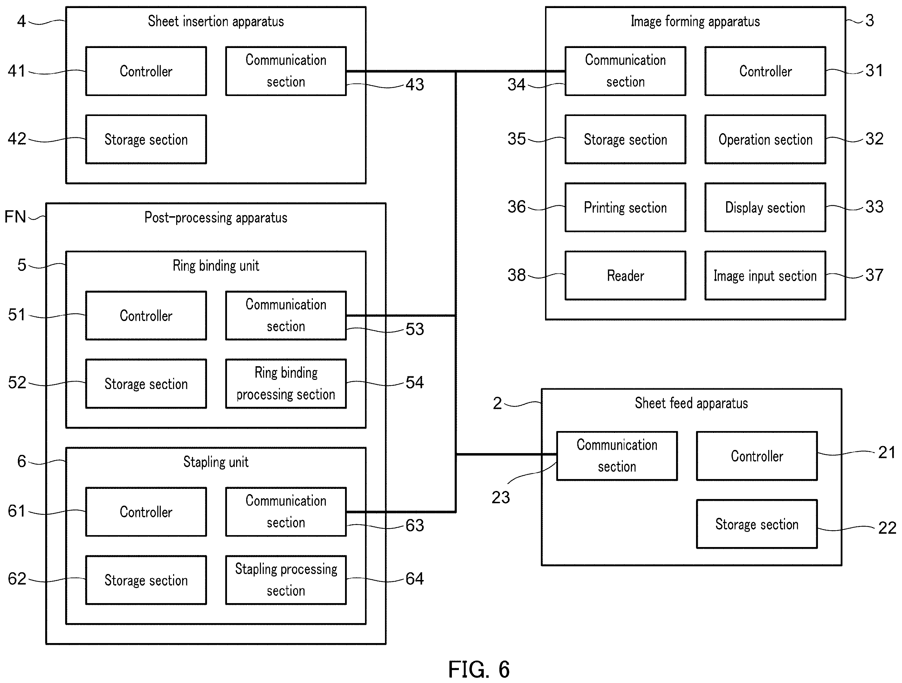

Fig. 6 is a diagram illustrating an example of function blocks of the image forming system 1.

The image forming apparatus 3 includes a controller 31, an operation section 32, a display section 33, a communication section 34, a storage section 35, the printing section 36, an image input section 37, and the reader 38.

The controller 31 is constituted by a CPU, a RAM, a ROM, and the like. The controller 31 performs various arithmetic operations in cooperation with various program stored in the ROM or the like, and centrally controls each section of the image forming apparatus 3.

The controller 31 integrally controls the operation of each section of the image forming apparatus 3, and integrally controls the operation of the image forming system 1 (that is, the conveyor 1m, the sheet feed apparatus 2, the sheet insertion apparatus 4, and the post-processing apparatus FN). That is, according to the job setting, the controller 31 causes the sheet feed apparatus 2 to feed a desired sheet, causes the conveyor 1m to convey the sheet, executes printing on the sheet, and causes the post-processing apparatus FN to execute ring binding processing and the like.

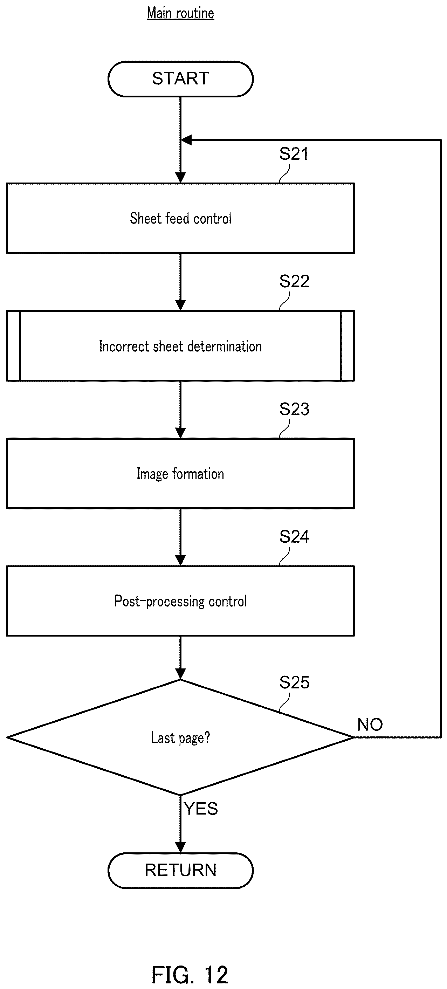

In addition, the controller 31 according to the present embodiment has a function of determining whether a sheet conveyed from the sheet feed apparatus 2 is conforming or non-conforming (that is, an incorrect sheet) (this matter will be described later with reference to Fig. 12 and Fig. 13).

The operation section 32 includes a touch screen 321 and operation keys. The operation section 32 generates an operation signal corresponding to an input operation by the user and outputs the operation signal to the controller 31.

The display section 33 displays an operation screen and a processing result on the touch screen 321 according to the control of the controller 31.

The communication section 34 includes an interface for communication and communicates with an external apparatus. For example, the communication section 34 transmits and receives control information to and from the sheet feed apparatus 2, the sheet insertion apparatus 4, and the post-processing apparatus FN. In addition, the communication section 34 receives image data to be printed from an external server or computer, and outputs the image data to the storage section 35.

The storage section 35 stores parameters, setting data, and the like necessary for processing in addition to various processing programs. In addition, the storage section 35 stores image data to be printed. As the storage section 35, a hard disk or a dynamic RAM (DRAM) can be used.

The printing section 36 performs printing by an electrophotographic method, and is composed of, for example, an exposure section, a developing section, a transfer section, a fixing section, and the like. At the time of printing, the exposure section emits laser light to a photoreceptor drum according to a pulse width modulation (PWM) signal obtained by PWM conversion of image data to form an electrostatic latent image. When the developing section performs developing processing thereof by using toner to form a toner image on the photoreceptor drum, the transfer section transfers the toner image onto a sheet, and the fixing section performs fixing processing of the toner image.

The image input section 37 generates image data by causing the scanner 372 to optically scan a document conveyed by the automatic document feed apparatus 371.

The reader 38 is configured to include, for example, an image sensor, an optical system, a light source, and the like. For example, the reader 38 captures, from the upper surface side, an image of a sheet to be conveyed to the conveyor 1m. The reader 38 is disposed in a line shape along the width direction of the sheet. For example, while a sheet is being conveyed from the upstream side toward the downstream side, the reader 38 captures an image of the sheet at each position, thereby capturing an image of the sheet in its entirety. Then, the images captured by the reader 38 at each position are superposed one on another to generate a read image of the sheet in its entirety (hereinafter, referred to as the "read image").

The reader 38 has a length exceeding the width of the sheet, and is configured to capture an image of a punch hole formed in the sheet (that is, the binder sheet).

The sheet feed apparatus 2 includes a controller 21, a storage section 22, and a communication section 23.

The controller 21 has the same configuration as the controller 31 of the image forming apparatus 3, and controls each section of the sheet feed apparatus 2. For example, the controller 21 controls the conveyance of a sheet set in the sheet feed trays T1, T2, and T3 according to control information received from the image forming apparatus 3. The storage section 22 stores parameters, setting data, and the like necessary for processing in addition to various processing programs. The communication section 23 has the same configuration as the communication section 34 of the image forming apparatus 3, and communicates with the image forming apparatus 3.

The sheet insertion apparatus 4 includes a controller 41, a storage section 42, and a communication section 43.

The controller 41 has the same configuration as the controller 31 of the image forming apparatus 3, and controls each section of the sheet insertion apparatus 4. For example, the controller 41 controls the conveyance of a sheet set in the sheet feed tray T6 or T7 according to control information received from the image forming apparatus 3. The storage section 42 stores parameters, setting data, and the like necessary for processing in addition to various processing programs. The communication section 43 has the same configuration as the communication section 34 of the image forming apparatus 3, and communicates with the image forming apparatus 3 and the post-processing apparatus FN.

The ring binding unit 5 includes a controller 51, a storage section 52, a communication section 53, and the ring binding processing section 54.

The controller 51 has the same configuration as the controller 31 of the image forming apparatus 3, and controls each section of the ring binding unit 5. For example, the controller 51 causes the ring binding processing section 54 to execute the ring binding processing on a sheet, which has been fed to the ring binding unit 5, according to control information received from the image forming apparatus 3. The storage section 52 stores parameters, setting data, and the like necessary for processing in addition to various processing programs. The communication section 53 has the same configuration as the communication section 34 of the image forming apparatus 3, and communicates with the image forming apparatus 3 and the like.

The ring binding processing section 54 executes the above-described ring binding processing.

The stapling unit 6 includes a controller 61, a storage section 62, a communication section 63, and a stapling processing section 64.

The controller 61 has the same configuration as the controller 31 of the image forming apparatus 3, and controls each section of the stapling unit 6. For example, the controller 61 causes the stapling processing section 64 to execute the stapling processing on a sheet, which has been fed to the stapling unit 6, according to control information received from the image forming apparatus 3. The storage section 62 stores parameters, setting data, and the like necessary for processing in addition to various processing programs. The communication section 63 has the same configuration as the communication section 34 of the image forming apparatus 3, and communicates with the image forming apparatus 3 and the like. The stapling processing section 64 performs the above-described stapling processing.

### [Operation of the image forming system 1]

### << Job information creation operation >>

Next, operations of the image forming system 1 described above when a job including the ring binding processing is executed will be described. First, a job information creation operation before a job is executed will be described.

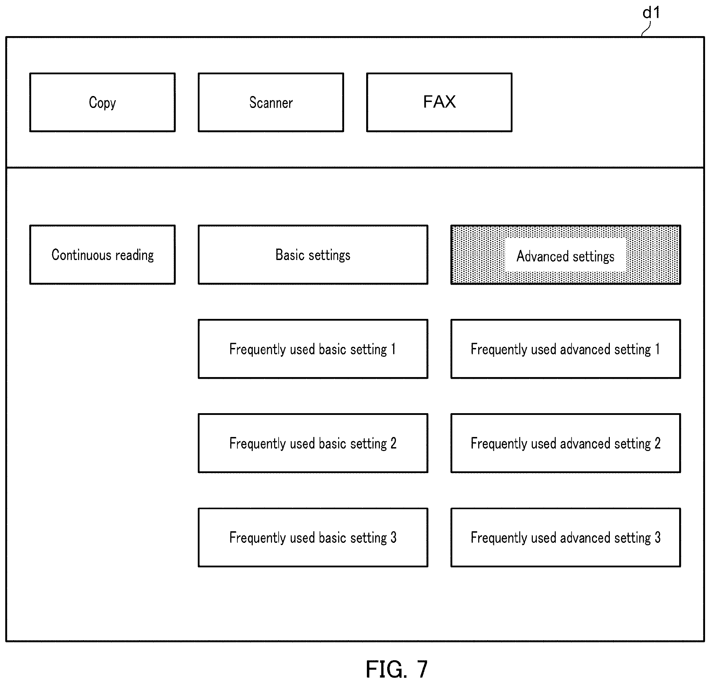

Figs. 7 to 10 are diagrams illustrating examples of operation screens according to job setting.

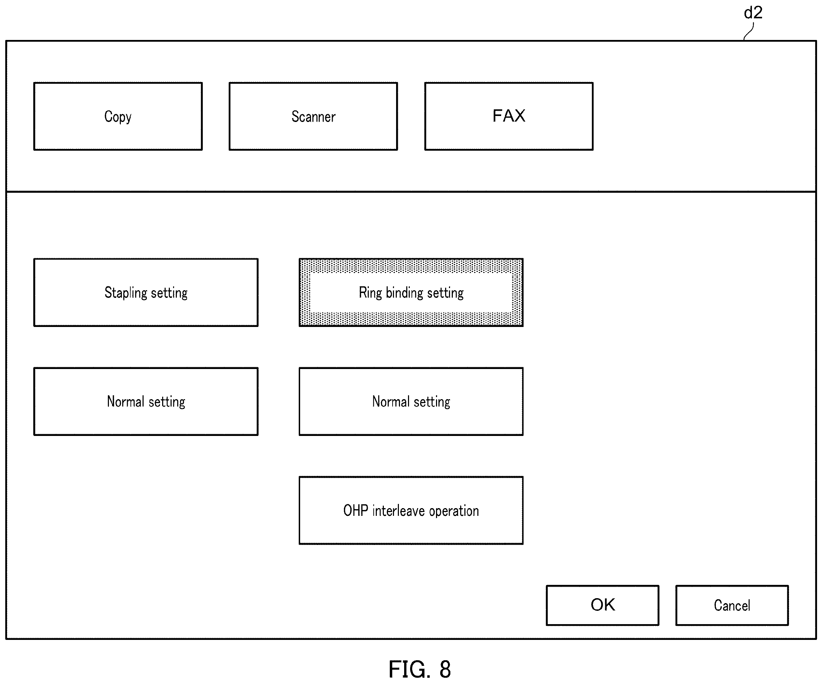

In a stand-by state, the display section 33 displays an operation screen d1 of a main menu illustrated in Fig. 7. When the item of advanced settings is selected and operated by the user via the operation section 32 on the operation screen d1, the display section 33 displays an operation screen d2 for advanced settings illustrated in Fig. 8. In a case where the setting related to the ring binding processing is performed, the user may select and operate the item of the ring binding setting.

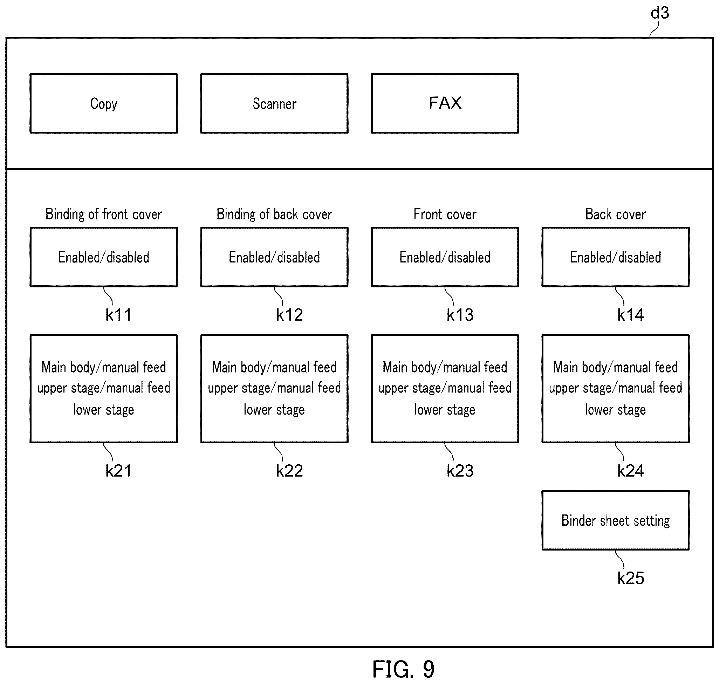

When the item of the ring binding setting is selected by the user on the operation screen d2, the display section 33 displays an operation screen d3 of the ring binding setting illustrated in Fig. 9. On the operation screen d3, keys k11 to k14 for selecting whether to bind a booklet by using a sheet for a front cover, a sheet for a back cover, a sheet for binding of the front cover, and a sheet for binding of the back cover, respectively, at the time of the ring binding processing are displayed. Each time the keys k11 to k14 are operated, the display on the keys k11 to k14 is switched between enabled and disabled. The user operates the keys k11 to k14 corresponding to sheets necessary for the bookbinding to switch to the display of enabled, and operates the keys k11 to k14 corresponding to sheets unnecessary for the bookbinding to switch to the display of disabled.

Below the keys k11 to k14, keys k21 to k24 for selecting the sheet feed sources of sheets used for the front cover, for the back cover, for binding of the front cover, and for binding of the back cover are displayed. Each time the keys k21 to k24 are operated, the display on the keys k21 to k24 is sequentially switched among main body, manual feed upper stage, and manual feed lower stage. Here, the sheet feed source indicated as the main body indicates, among the sheet feed trays T1 to T5 of the sheet feed apparatus 2 or the image forming apparatus 3, a sheet feed tray for which the sheet size has been set. In addition, the sheet feed source indicated as the manual feed upper stage indicates the sheet feed tray T6 of the sheet insertion apparatus 4, and the sheet feed source indicated as the manual feed lower stage indicates the sheet feed tray T7 of the sheet insertion apparatus 4.

For example, in a case where only a front cover is used for the bookbinding of a booklet and a sheet for the front cover is fed from the sheet feed apparatus 2, the user may operate the key k13 for the front cover to set the key K13 to the enabled and may operate the other keys k11, k12, and k14 to set the keys k11, k12, and k14 to the disabled. Further, the user may operate the key k23 to set the key k23 to the main body. In a case where all sheets for the front cover, for the back cover, and for binding of the front and back covers are used in bookbinding, the user may operate the keys k11 to k14 to set all the keys k11 to k14 to the enabled, and may operate the keys k21 to k24 to set which sheet feed sources the sheets for the front cover, for the back cover, and for binding of the front and back covers are fed from, respectively.

In addition, a binding sheet setting key 25 is displayed on the operation screen d3. By pressing the binding sheet setting key 25, the operation screen is switched to a binding sheet setting screen d4 in Fig. 10. On the binding sheet setting screen d4, the sheet type (that is, the arrangement of a punch hole, or the like) in a case where a binding sheet is used can be set. Specifically, keys k31 to k33 are displayed on the binding sheet setting screen d4, and with these keys, it is possible to set the sheet size, the arrangement of a punch hole in the sheet, and the shape of the punch hole.

The contents set as described above are stored as print job information. In addition, the information on the arrangement of a punch hole and the shape of the punch hole in the sheet set on the binding sheet setting screen d4 is also used as reference data in incorrect sheet determination processing.

When a job for which setting for the ring binding processing has been performed as described above is executed, the controller 31 of the image forming apparatus 3 determines, before starting printing, the sheet feed tray as the sheet feed source, determines the sheet feed order, and generates job information.

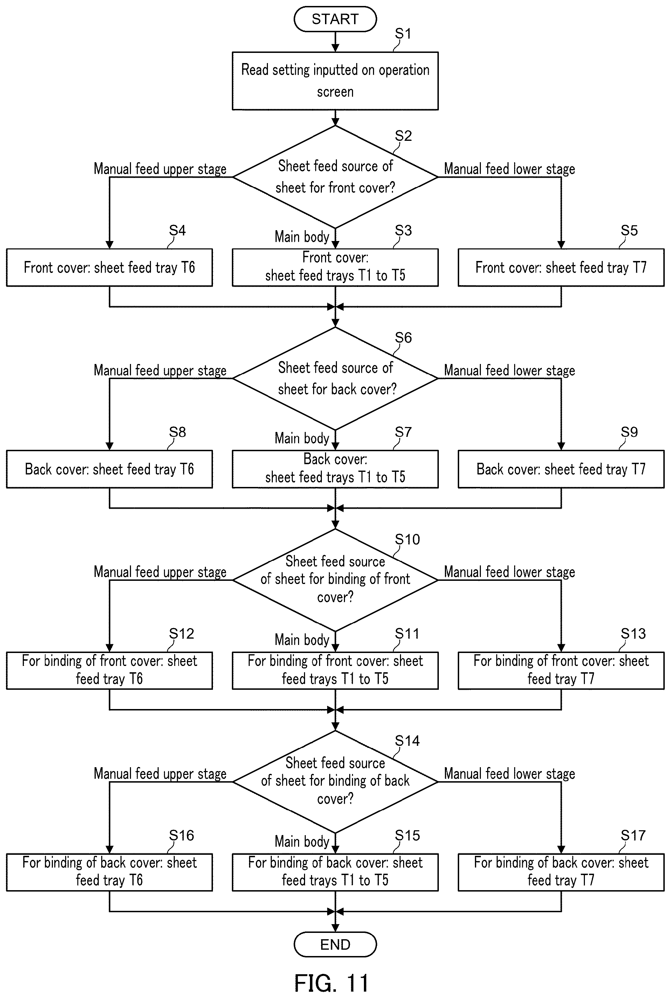

Fig. 11 is a diagram illustrating an example of a flowchart in which the controller 31 of the image forming apparatus 3 creates job information.

As illustrated in Fig. 11, the controller 31 reads ring binding processing-related setting inputted by the user on the operation screen d3 (step S1), and judges the sheet feed source of the sheet for the selected front cover (step S2).

In a case where the selected sheet feed source is the main body (step S2: Main body), the controller 31 determines that the sheet feed source of the sheet for the front cover is the sheet feed apparatus 2 or the image forming apparatus 3 (that is, the sheet feed trays T1 to T5) (step S3). In a case where the selected sheet feed source is the manual feed upper stage (step S2: Manual feed upper stage), the controller 31 determines that the sheet feed source of the sheet for the front cover is the sheet feed tray T6 of the sheet insertion apparatus 4 (step S4). In a case where the selected sheet feed source is the manual feed lower stage (step S2: Manual feed lower stage), the controller 31 determines that the sheet feed source of the sheet for the front cover is the sheet feed tray T7 of the sheet insertion apparatus 4 (step S5).

In the same manner as the front cover, the controller 31 judges the sheet feed source selected as the sheet feed source of the sheet for the back cover (step S6). In a case where the selected sheet feed source is the main body (step S6: Main body), the controller 31 determines that the sheet feed source of the sheet for the back cover is the sheet feed apparatus 2 or the image forming apparatus 3 (that is, the sheet feed trays T1 to T5) (step S7). In a case where the selected sheet feed source is the manual feed upper stage (step S6: Manual feed upper stage), the controller 31 determines that the sheet feed source of the sheet for the back cover is the sheet feed tray T6 of the sheet insertion apparatus 4 (step S8). In a case where the selected sheet feed source is the manual feed lower stage (step S6: Manual feed lower stage), the controller 31 determines that the sheet feed source of the sheet for the back cover is the sheet feed tray T7 of the sheet insertion apparatus 4 (step S9).

Next, the controller 31 judges the sheet feed source selected as the sheet feed source of the sheet for binding of the front cover (step S10). In a case where the selected sheet feed source is the main body (step S10: Main body), the controller 31 determines that the sheet feed source of the sheet for binding the front cover is the sheet feed apparatus 2 or the image forming apparatus 3 (that is, the sheet feed trays T1 to T5) (step S11). In a case where the selected sheet feed source is the manual feed upper stage (step S10: Manual feed upper stage), the controller 31 determines that the sheet feed source is the sheet feed tray T6 of the sheet insertion apparatus 4 (step S12). In a case where the selected sheet feed source is the manual feed lower stage (step S10: Manual feed lower stage), the controller 31 determines that the sheet feed source is the sheet feed tray T7 of the sheet insertion apparatus 4 (step S13).

Next, the controller 31 judges the sheet feed source selected as the sheet feed source of the sheet for binding of the back cover (step S14). In a case where the selected sheet feed source is the main body (step S14: Main body), the controller 31 determines that the sheet feed source of the sheet for binding of the back cover is the sheet feed apparatus 2 or the image forming apparatus 3 (that is, the sheet feed trays T1 to T5) (step S15). In a case where the selected sheet feed source is the manual feed upper stage (step S14: Manual feed upper stage), the controller 31 determines that the sheet feed source is the sheet feed tray T6 of the sheet insertion apparatus 4 (step S16). In a case where the selected sheet feed source is the manual feed lower stage (step S14: Manual feed lower stage), the controller 31 determines that the sheet feed source is the sheet feed tray T7 of the sheet insertion apparatus 4 (step S17).

When the sheet feed sources of the sheets are determined as described above, the controller 31 determines that the sheet feed order is the following orders 1 to 5 as illustrated in Fig. 5. In a case where the booklet main body includes a plurality of pages, the controller 31 determines the order in ascending order of page 1, page 2, and so on.
1: Back cover
2: Back cover binding sheet
3: Front cover binding sheet
4: Front cover
5: Booklet main body

### << Operations at the time of printing >>

Next, processing that the controller 31 performs when printing is executed will be described. Note that, here, a print job for forming a booklet by performing ring binding processing on binder sheets will be described.

In the related art, in this type of print job, there have been cases where a non-conforming binder sheet is mixed in the print job due to a setting error in the job setting, an error in loading of a sheet into a sheet feed tray, an error in the orientation of a binder sheet to be loaded on a sheet feed tray, or the like. In such a case, in the image forming system according to the related art, an operation failure may occur or a jam may occur at the stage of collecting a plurality of binder sheets by a ring binding member, and thus, the job may be redone.

In the image forming system 1 according to the present embodiment, incorrect sheet determination is performed on each of binder sheets, on which printing is performed continuously printed, during a print job from the viewpoint of avoiding such a situation, and in a case where a non-conforming sheet (that is, an incorrect sheet) is detected, abnormality conveyance processing is performed.

The "abnormality conveyance processing" is processing of discharging a sheet during conveyance to the purge tray F2 or processing of stopping the conveyance operation of a sheet during conveyance. Thus, a situation in which a non-conforming sheet is subjected to the ring binding processing is avoided.

Fig. 12 is a flowchart illustrating processing of a main routine performed by the controller 31 when printing is executed.

The controller 31 executes the following processing according to job information set in a print job. Note that, in the processing in step S21 to step S25, the processing for each page starting from the first page is sequentially performed according to the job information.

In step S21, the controller 31 controls the sheet feed apparatus 2 and/or the sheet insertion apparatus 4 such that the sheet set in the job information of the print job (see Fig. 11) is fed to the conveyor 1m.

In step S22, the controller 31 performs incorrect sheet determination on the sheet to be conveyed to the conveyor 1m. Note that, this incorrect sheet determination is executed only in the case of a print job in which the ring binding processing is performed on binder sheets to form a booklet. Details of the processing in step S22 above will be described later with reference to Fig. 13.

In step S23, the controller 31 controls the printing section 36 such that image formation on a page on which printing is performed is performed on the sheet during conveyance.

In step S24, the controller 31 controls the post-processing apparatus FN such that post-processing is performed on the sheet during conveyance. This post-processing is the ring binding processing or stapling processing described above.

In step S25, the controller 31 determines whether the processing that is being executed is processing on the last page. Then, in a case where the processing that is being executed is the processing on the last page (S25: YES), the controller 31 ends the series of processing in the flowchart of Fig. 12. In a case where the processing that is being executed is not the processing on the last page (S25: NO), on the other hand, the controller 31 returns to step S21 and executes the processing on the next page.

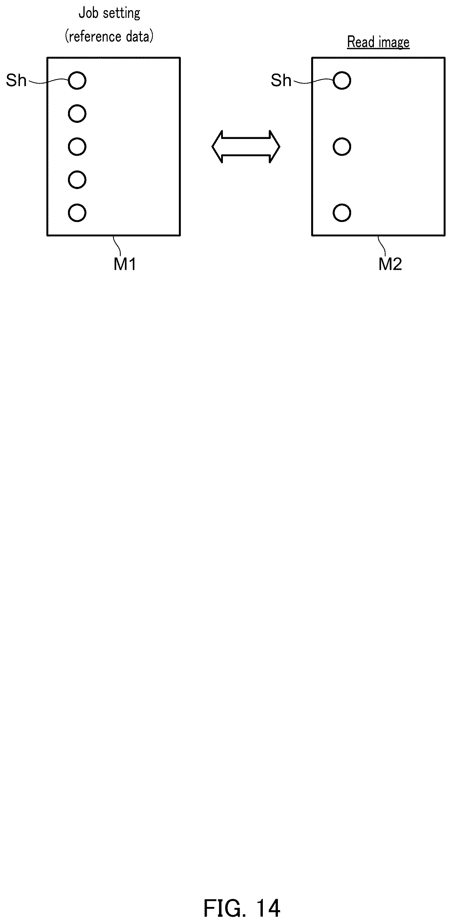

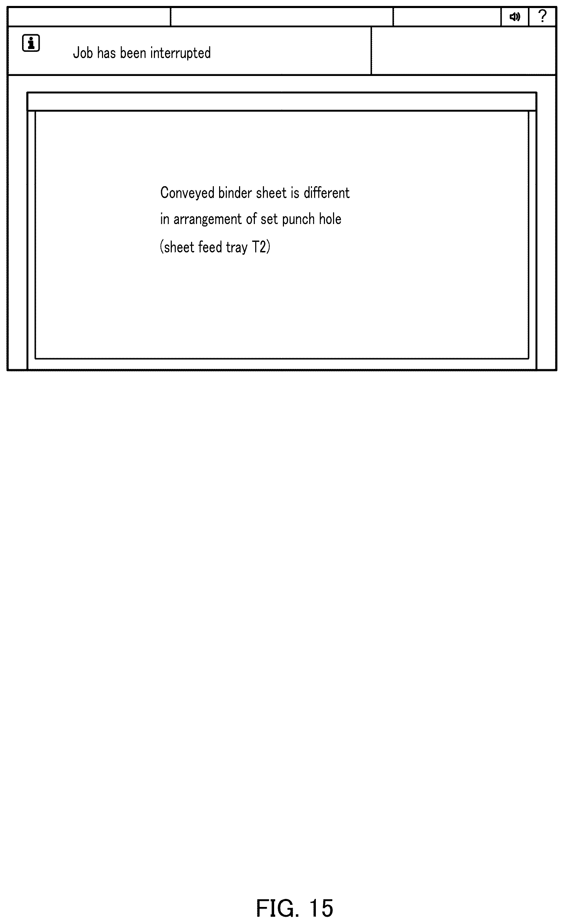

Fig. 13 is a flowchart illustrating the incorrect sheet determination processing (S22) in the main routine in Fig. 12. Fig. 14 is a diagram provided for schematically describing the incorrect sheet determination processing (S22). Fig. 15 is a diagram illustrating an example of a warning display in a case where an incorrect sheet is detected.

In step S221, the controller 31 determines whether there is use setting of the binder sheet in the job information set in the print job. Note that, the use setting of binder sheet is, for example, as illustrated in Fig. 10, setting in a case where a binder sheet is used as a sheet on which printing is performed, and includes setting information on the arrangement and shape of a punch hole in the binder sheet.

Here, in a case where there is no use setting of the binder sheet in the job information (S221: NO), the controller 31 ends the series of processing in the flowchart of Fig. 13 without performing any processing in particular (that is, returns to the main routine in Fig. 12). On the other hand, in a case where there is use setting of the binder sheet in the job information (S221: YES), the controller 31 advances the processing to step S222.

In step S222, the controller 31 controls the reader 38 such that an image of the sheet during conveyance is captured.

In step S223, the controller 31 detects, from the read image obtained in step S222, the position and shape of the punch hole in the sheet. At this time, the controller 31 detects the arrangement and shape of the punch hole in the sheet by using, for example, image recognition processing known in the art, such as pattern matching.

Here, the shape of the punch hole, which is detected from the read image by the controller 31, includes, for example, the size of the punch hole in the sheet. In addition, the arrangement of the punch hole, which is detected from the read image by the controller 31, includes, for example, one of the number of punch holes in the sheet, the arrangement aspect of the punch hole in the sheet conveyance direction, or the arrangement aspect of the punch hole in the sheet width direction. The controller 31 outputs, for example, the detection result of the arrangement and shape of the punch hole in the sheet as, for example, individual classification information according to the arrangement and shape.

In step S224, the controller 31 determines whether the arrangement and shape of the punch hole in the sheet during conveyance, which are detected in step S223, are different from the arrangement and shape of the punch hole in the sheet set as the job information (that is, reference data) (see Fig. 14). Then, in a case where the sheet during conveyance has different setting (S224: YES), the controller 31 advances the processing to step S225. On the other hand, in a case where the sheet during conveyance has identical setting (S224: NO), the controller 31 ends the series of processing in the flowchart of Fig. 13 without performing any processing in particular.

Note that, in this step S224, for example, the controller 31 compares the classification information of the arrangement and shape of the punch hole in the sheet set as the job information (that is, reference data) with the classification information of the arrangement and shape of the punch hole in the sheet obtained by the detection from the read image to determine whether the two pieces of information coincide or do not coincide with each other.

In step S225, the controller 31 causes the display section 33 to output a warning display indicating that sheet non-conformity is occurring (see Fig. 15). At this time, the controller 31 displays, based on the determination result in step S224, an abnormality content as to whether there is an abnormality in the arrangement of the punch hole of the sheet or whether there is an abnormality in the shape of the punch hole of the sheet. In addition, at this time, the controller 31 reads, from the job information, which sheet feed tray the sheet during conveyance has been conveyed from, and displays the identification information of the sheet feed tray that has fed the sheet.

Note that, Fig. 14 illustrates an aspect in which the sheet during conveyance is different from the sheet set as the job information in terms of the arrangement of the punch hole (or the number of punch holes). In addition, the warning display of Fig. 15 displays that there is an abnormality in the arrangement of the punch hole of the sheet based on the determination result in step S224, and displays that the incorrect sheet has been fed from the sheet feed tray T2.

In step S226, the controller 31 discharges the sheet during conveyance to the purge tray F2.

In step S227, the controller 31 interrupts the job. At this time, the controller 31 puts information on the page on hold on which the printing is currently being executed.

In step S228, the controller 31 waits until there is a resumption instruction from the user (S228: NO). Then, in a case where there is a resumption instruction from the user (S228: YES), the controller 31 advances the processing to step S229.

In step S229, the controller 31 resumes the printing from the page on hold. That is, the controller 31 controls the sheet feed apparatus 2 again such that the subsequent sheet is fed, and then returns to the processing of the main routine in step S23 to cause the printing section 36 to execute the printing on the page on hold of the subsequent sheet. This makes it possible to continue the print job from the state before the interruption.

In the image forming system 1 according to the present embodiment, such processing makes it possible to prevent a print job from being redone even in a case where an incorrect binder sheet is mixed during the printing operation.

### [Effects]

As described above, in the present embodiment, a conveyance apparatus has been disclosed which includes:
a sheet feeder that continuously feeds a binder sheet;
a conveyor that conveys the binder sheet along a conveyance route;
a reader that is disposed in the conveyance route and reads the binder sheet; and
a controller that determines whether the binder sheet during conveyance is conforming or non-conforming, based on an arrangement of a punch hole or a shape of the punch hole in the binder sheet specified from a read image, and executes abnormality conveyance processing on the binder sheet during conveyance in a case where a non-conforming binder sheet is detected among a plurality of the binder sheets during the conveyance.

The conveyance apparatus according to the present embodiment make it possible to prevent a situation from occurring in which printing of all a series of printed products is redone due to a non-conforming binder sheet being partially mixed when the ring binding processing is performed.

### < Variation 1 >

In the above-described embodiment, an aspect has been indicated in which in a case where a binder sheet is used in a print job, the use setting of the binder sheet is performed in advance. However, from the viewpoint of reducing the workload of the user, it is desirable to be able to detect an incorrect sheet mixed during the printing operation without performing such use setting.

Accordingly, the controller 31 according to the present variation sets reference data for use in incorrect sheet determination based on a read image captured by the reader 38 during a print job. The controller 31 according to the present variation creates the reference data based on, for example, the read image of the first binder sheet that is conveyed at the time of the start of a job.

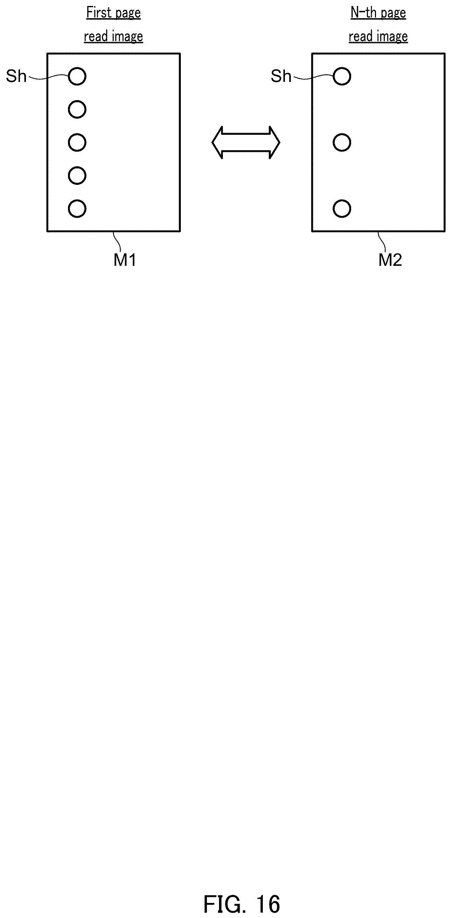

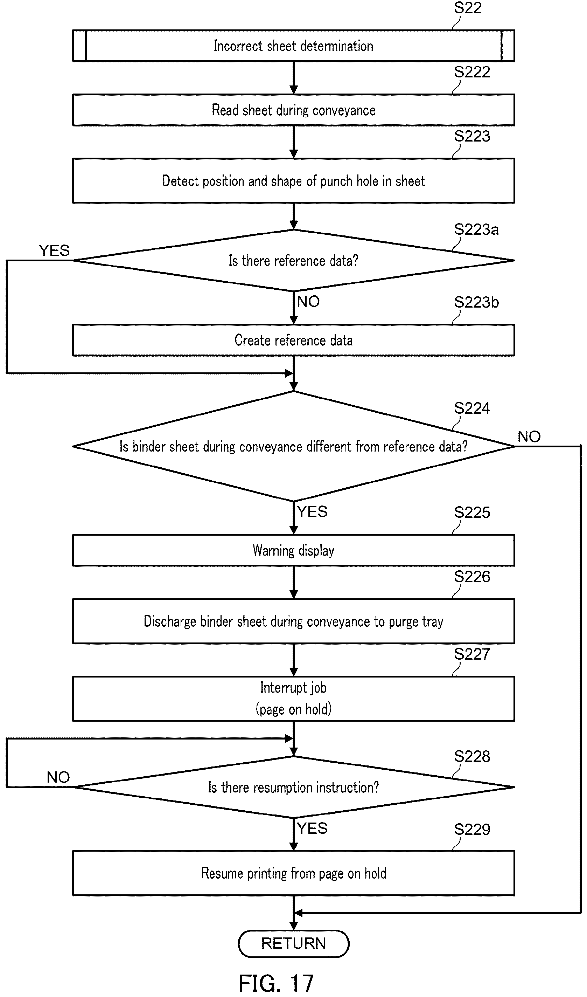

Fig. 16 is a diagram provided for describing an aspect of the incorrect sheet determination processing (S22) according to Variation 1. Fig. 17 is a flowchart illustrating the incorrect sheet determination processing (S22) according to Variation 1.

In the incorrect sheet determination processing (S22) according to Variation 1, the processing in step S223a and step S223b is performed before the processing in step S224 of Fig. 13. In addition, in the incorrect sheet determination processing (S22) according to Variation 1, the processing of determining whether the binder sheet setting has been made in step S221 of Fig. 13 is omitted.

In step S224a, the controller 31 determines whether reference data to be used for sheet determination has been set. In a case where reference data has been set (S223a: YES), the controller 31 proceeds to step S224, and in a case where reference data has not been set (S223a: NO), the controller 31 proceeds to step S223b.

In step S223b, the controller 31 creates reference data to be used for sheet determination based on the information on the arrangement and shape of the punch hole in the sheet obtained in step S223. Then, the subsequent determining processing in step S224 is executed using the reference data.

The processing as described above enables the image forming system 1 according to the present variation to detect an incorrect sheet mixed during the printing operation without performing the use setting of a binder sheet in a print job. The image forming system 1 according to the present variation is useful from the viewpoint of reducing the workload of the user.

### < Variation 2 >

In the above-described embodiment, incorrect sheet determination was performed only for sheets fed from the sheet feed apparatus 2. However, from the viewpoint of more surely preventing an incorrect sheet from being mixed, it is desirable to determine whether a sheet fed from the sheet insertion apparatus 4 is also a non-conforming sheet.

Given the above, the controller 31 according to the present variation adopts a configuration of determining whether each of a sheet fed from the sheet feed apparatus 2 and a sheet fed from the sheet insertion apparatus 4 is conforming or non-conforming

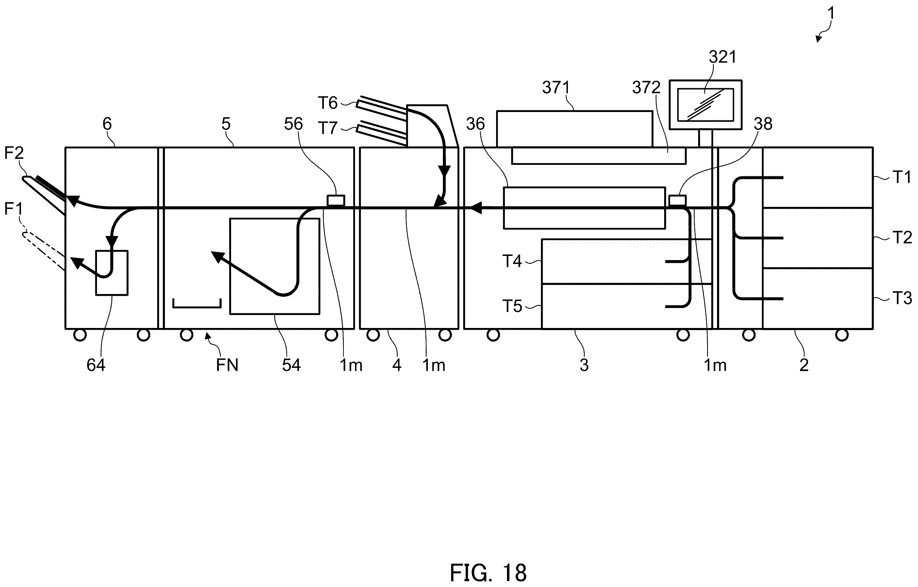

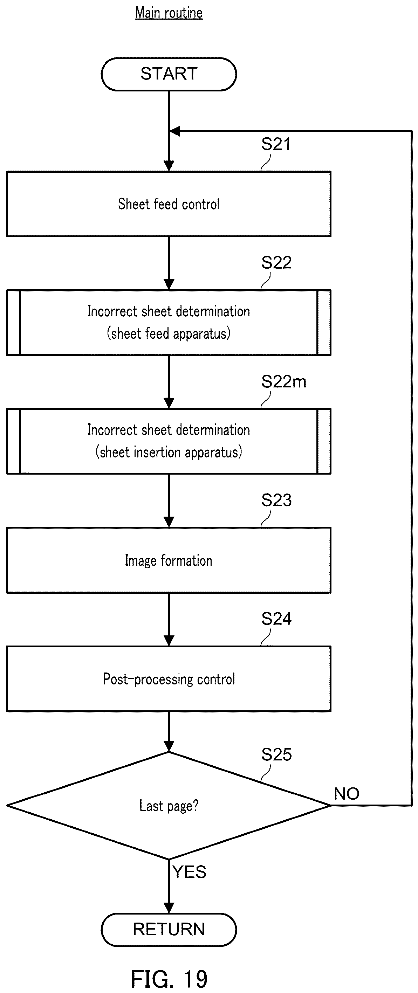

Fig. 18 is a diagram illustrating the configuration of the image forming system 1 according to Variation 2. Fig. 19 is a flowchart illustrating the processing of the main routine performed by the controller 31 according to Variation 2.

The image forming system 1 according to the present variation includes, in addition to the reader 38 (referred to as the "first reader 38") disposed between the sheet feed apparatus 2 and the printing section 36, a second reader 56 disposed on the downstream side of the sheet inserter from the sheet insertion apparatus 4.

Here, the first reader 38 is provided to capture an image of the sheet fed from the sheet feed apparatus 2, and the second reader 56 is provided to capture an image of the sheet fed from the sheet insertion apparatus 4.

Then, in the routine processing, the controller 31 according to the present variation executes processing of determining whether the sheet fed from the sheet feed apparatus 2 is conforming or non-conforming (S22a) and processing of determining whether the sheet fed from the sheet insertion apparatus 4 is conforming or non-conforming (S22b) (see Fig. 19).

The processing of determining whether the sheet fed from the sheet feed apparatus 2 is conforming or non-conforming (S22a) is processing of performing incorrect sheet determination of the sheet fed from the sheet feed apparatus 2 based on the read image generated by the first reader 38. The processing of determining whether the sheet fed from the sheet insertion apparatus 4 is conforming or non-conforming (S22b) is processing of performing incorrect sheet determination of the sheet fed from the sheet insertion apparatus 4 based on the read image generated by the second reader 56. The series of determination processing itself for S22a and S22b is the same as the processing in Fig. 13.

The processing as described above enables the image forming system 1 according to the present variation to determine whether each of the sheet fed from the sheet feed apparatus 2 and the sheet fed from the sheet inserting device 4 is a non-conforming sheet.

### < Other Embodiments >

The present invention is not limited to the embodiment described above, and is applicable to various variation aspects.

For example, there are various methods for the comparison processing between the reference data and the read image in the incorrect sheet determination processing described in the above embodiment. For example, the controller 31 may use image information of a binder sheet set as the reference data. In this case, as the reference data, the arrangement and shape of the punch hole in the sheet may be expressed by, for example, a two-dimensional coordinate system in the sheet (for example, the region of the punch hole in the sheet is expressed by a two-dimensional coordinate system). Then, for example, the controller 31 may compare the image information according to the reference data with the read image by using image recognition processing known in the art such as pattern matching, and may perform the incorrect sheet determination based on the degree of coincidence thereof.

Although embodiments of the present invention have been described and illustrated in detail, the disclosed embodiments are made for purpose of illustration and example only and not limitation. The scope of the present invention should be interpreted by terms of the appended claims.

### Industrial Applicability

According to the image forming system of the present invention, it is possible to avoid a situation in which a job is redone due to an incorrect sheet in a print job in which ring binding processing is performed on a binder sheet to form a booklet.

### Reference Signs List

1 Image forming system
1m Conveyor
2 Sheet feed apparatus
3 Image forming apparatus
5 Ring binding unit
6 Stapling unit
F1 Sheet ejection tray
F2 Purge tray
FN Post-processing apparatus

## Claims

1. A conveyance apparatus, comprising:
a sheet feeder that continuously feeds a binder sheet;
a conveyor that conveys the binder sheet along a conveyance route;
a reader that is disposed in the conveyance route and reads the binder sheet; and
a controller that determines whether the binder sheet during conveyance is conforming or non-conforming, based on an arrangement of a punch hole or a shape of the punch hole in the binder sheet specified from a read image, and executes abnormality conveyance processing on the binder sheet during the conveyance in a case where a non-conforming binder sheet is detected among a plurality of the binder sheets during the conveyance.

2. The conveyance apparatus according to claim 1, wherein
the abnormality conveyance processing is processing of ejecting the binder sheet during the conveyance to a purge tray.

3. The conveyance apparatus according to claim 1, wherein
the abnormality conveyance processing is processing of stopping conveyance processing of the binder sheet during the conveyance.

4. The conveyance apparatus according to claim 1, wherein
the controller determines whether the binder sheet during the conveyance is conforming or non-conforming, based on whether the arrangement of the punch hole or the shape of the punch hole in the binder sheet according to reference data coincides or does not coincide with the arrangement of the punch hole or the shape of the punch hole in the binder sheet specified from the read image.

5. The conveyance apparatus according to claim 4, wherein
the reference data is sheet data set in advance in a print job.

6. The conveyance apparatus according to claim 5, wherein
the reference data is set based on the read image read by the reader during the print job.

7. The conveyance apparatus according to claim 6, wherein
the controller creates the reference data based on the read image read by the reader for a first binder sheet among the plurality of binder sheets to be conveyed at a job start.

8. The conveyance apparatus according to claim 1, wherein
in a case where the non-conforming binder sheet is detected among the plurality of binder sheets during the conveyance, the controller displays and outputs a warning indicating that sheet non-conformity is occurring.

9. The conveyance apparatus according to claim 8, wherein
when the warning is outputted and displayed, the controller displays an abnormality content as to whether there is an abnormality in the arrangement of the punch hole of the sheet or whether there is an abnormality in the shape of the punch hole of the sheet.

10. The conveyance apparatus according to claim 8, wherein
when the warning is outputted, the controller displays which sheet feed tray of a plurality of sheet feed trays of the sheet feeder the non-conforming binder sheet has been fed from.

11. The conveyance apparatus according to claim 1, wherein
the shape of the punch hole to be verified by the controller includes a size of the punch hole in the binder sheet.

12. The conveyance apparatus according to claim 1, wherein
the arrangement of the punch hole to be verified by the controller includes one of a number of a plurality of the punch holes in the binder sheet, an arrangement aspect of the punch hole in a sheet conveyance direction, or an arrangement aspect of the punch hole in a sheet width direction.

13. The conveyance apparatus according to claim 1, further comprising:
a sheet inserter that is connected to a downstream side of the conveyance route and inserts an additional binder sheet into the conveyance route, the additional binder sheet being different from the binder sheet fed by the sheet feeder; and
a second reader that is disposed downstream of a position in a conveyance direction and reads the additional binder sheet, the position being a position at which the sheet inserter inserts the additional binder sheet, wherein
the controller determines whether each of the binder sheet fed from the sheet feeder and the additional binder sheet fed from the sheet inserter is conforming or non-conforming.

14. An image forming system, comprising:
the conveyance apparatus according to claim 1;
an image forming apparatus that forms an image on the binder sheet; and
a post-processing apparatus that is disposed on a downstream side of the image forming apparatus and performs ring binding processing on the binder sheet.

15. A control method of a conveyance apparatus, comprising:
continuously feeding a binder sheet;
conveying the fed binder sheet along a conveyance route;
reading the binder sheet during conveyance, and
determining whether the binder sheet during the conveyance is conforming or non-conforming, based on an arrangement of a punch hole or a shape of the punch hole in the binder sheet specified from a read image, and executing abnormality conveyance processing on the binder sheet during the conveyance in a case where a non-conforming binder sheet is detected among a plurality of the binder sheets during the conveyance.
